# EUROPÄISCHE PATENTSCHRIFT

(11) **EP 3 465 534 B1**
(45) Veröffentlichungstag und Bekanntmachung des Hinweises auf die Patenterteilung: **08.04.2020**
(21) Anmeldenummer: 17727514.6
(22) Anmeldetag: 22.05.2017
(51) Int. Cl.: G06K 9/00

(54) **BELEUCHTUNGSEINRICHTUNG FÜR EIN KRAFTFAHRZEUG ZUR ERHÖHUNG DER ERKENNBARKEIT EINES HINDERNISSES**
LIGHTING DEVICE FOR A MOTOR VEHICLE FOR INCREASING THE DETECTABILITY OF AN OBSTACLE
DISPOSITIF D'ÉCLAIRAGE POUR UN VÉHICULE AUTOMOBILE POUR AUGMENTER LA DÉTECTABILITÉ D'UN OBSTACLE

(30) Priorität: 24.05.2016 DE 102016006390
(43) Veröffentlichungstag der Anmeldung: 10.04.2019
(73) Patentinhaber: Audi AG, 85045 Ingolstadt (DE)
(72) Erfinder: NEUKAM, Johannes, 91257 Pegnitz (DE)
(86) Internationale Anmeldenummer: PCT/EP2017/062223
(87) Internationale Veröffentlichungsnummer: WO 2017/202750

(56) Entgegenhaltungen:
- WO-A1-2013/117923
- DE-A1-102013 016 904
- DE-A1-102014 100 579
- DE-A1-102015 008 774

## Beschreibung

Die Erfindung betrifft eine Beleuchtungseinrichtung für ein Kraftfahrzeug gemäß dem Oberbegriff des Patentanspruchs 1. Weiterhin betrifft die Erfindung ein Fahrerassistenzsystem mit einer derartigen Beleuchtungseinrichtung sowie ein Kraftfahrzeug mit einem entsprechenden Fahrerassistenzsystem. Überdies betrifft die Erfindung ein Verfahren zum Betreiben einer Beleuchtungseinrichtung eines Kraftfahrzeugs gemäß dem Oberbegriff des Patentanspruchs 9.

Moderne Kraftfahrzeuge, beispielsweise Verbrennungskraftfahrzeuge oder Elektrofahrzeuge oder Hybridfahrzeuge, sind zur Erzeugung eines virtuellen Abbilds der dreidimensionalen Umgebung des Kraftfahrzeugs auf die Verwendung von Ultraschall-, Radar- und/oder Stereokamerasensoren angewiesen. Viele Fahrerassistenzsysteme arbeiten auf der Grundlage derartiger Messwerte,

Mit steigender Anzahl an Sensoren nimmt die Menge der Umgebungsdaten immer weiter zu. Dies führt dazu, dass Informationen in Bereichen in der Umgebung des Kraftfahrzeugs ausgewertet werden können, die zuvor nicht erfassbar waren. Das Kraftfahrzeug erhält somit eine weitreichende Übersicht über seine Umgebung. Des Weiteren führt die Kombination mehrerer Messsensoren in Bereichen hoher Signifikanz dazu, eine Redundanz und erhöhte Genauigkeit bei der Erhebung der Daten zu erreichen.

In diesem Zusammenhang ist aus der DE 10 2010 039 092 A1 ein Verfahren zum Ermitteln eines Abstands eines Objekts von einem Fahrzeug bekannt, bei dem ein Bild von einer Umgebung vor oder hinter dem Fahrzeug im Infrarot-Wellenlängen-Bereich oder einem anderen, vom menschlichen Auge nicht sichtbaren Wellenlängenbereich aufgenommen wird. Des Weiteren schlägt die EP 1 628 141 A1 ein Verfahren zur Detektion und zur Abstandsbestimmung von Objekten im Fahrzeugfrontbereich eines Kraftfahrzeugs mit einer Mono-Kamera vor, wobei der Mono-Kamera im Frontbereich des Fahrzeugs mindestens zwei Messstrahlen-Emitter zugeordnet sind, die Messstrahlen definierter Beleuchtungsmuster emittieren. Überdies ist aus der DE 10 2014 100 579 A1 ein System bekannt zur Erzeugung von Informationen über eine Projektionsfläche vor einem Kraftfahrzeug, umfassend eine Beleuchtungseinrichtung, ein Detektionsmittel und ein Auswertungsmittel, wobei die Beleuchtungseinrichtung dazu ausgebildet ist, Licht auf die Projektionsfläche auszusenden, und wobei das Detektionsmittel dazu ausgebildet ist, das von der Projektionsfläche reflektierte Licht zu detektieren.

Die Offenlegungsschrift DE 10 2013 016 904 A1 beschreibt eine Leuchteinheit für ein Fahrzeug und ein Verfahren zum Betrieb einer Leuchteinheit. Zur Einstellung einer Lichtverteilung mittels einer Steuereinheit ist eine Information über eine einzustellende Grundlichtverteilung an ein Lichtquellenmodul sendbar. Die Einstellung der Lichtverteilung und der Betriebsparameter erfolgt hierbei insbesondere automatisch in Abhängigkeit von einer aktuellen Fahrsituation des Fahrzeugs. Diese wird mittels der Steuereinheit aus Zustandsgrößen Z ermittelt. Die Grundlichtverteilung kann mittels mehrerer Funktionen, beispielsweise einer Blendenfunktion mit 4 bis 6 Parametern, zu einer neuen gewünschten Lichtverteilung umgewandelt werden.

Die Offenlegungsschrift WO 2013/117923 A1 beschreibt eine Beleuchtungseinrichtung für Autoscheinwerfer mit einem Phasenmodulator. Diese Beleuchtungseinrichtung ist ausgebildet, kontrollierbare Lichtstrahlen zum Beleuchten einer Szene bereitzustellen. Die Beleuchtungseinrichtung weist einen räumlichen Lichtphasenmodulator auf. Damit kann ein Lichtstrahl mit einer Phasenverschiebung zu einfallendem Licht erzeugt werden. Die Beleuchtungseinrichtung beinhaltet zudem eine Fourier-Optik, um das phasenmodullierte Licht von dem räumlichen Lichtmodulator zu empfangen und daraus eine neue Lichtverteilung zu erzeugen. Die Beleuchtungseinrichtung beinhaltet zudem eine Projektionsoptik, um die Lichtverteilung darzustellen.

Momentan werden Objekte im Vorfeld des Kraftfahrzeugs, insbesondere in einem prognostizierten Fahrwegsbereich, unter anderem mittels einer Kamera ermittelt und ausgewertet. Die fortschreitende Entwicklung intelligenter Algorithmen auf dem Gebiet der Bildverarbeitung ermöglicht die Erkennung von Hindernissen und deren Entfernung, obwohl der Kamerasensor lediglich ein zweidimensionales Bild zur Auswertung zur Verfügung stellt, dem die Tiefendaten fehlen. Für die Auswertung ist der Hersteller eines Kraftfahrzeugs darauf angewiesen, darauf zu vertrauen, dass bei der automatisierten Auswertung Hindernisse korrekt erkannt und interpretiert werden. Dies stellt eine mögliche Fehlerquelle dar.

Insbesondere bei Dunkelheit sind die Umrisse und Konturen eines Objekts im Fahrbereich des Kraftfahrzeugs für ein kamerabasiertes Fahrerassistenzsystem schwerer zu erkennen als bei Tageslicht mit einer vergleichsweise homogen ausgeleuchteten Umgebung.

Es ist daher Aufgabe der vorliegenden Erfindung, eine Beleuchtungseinrichtung für ein Kraftfahrzeug, ein Fahrerassistenzsystem und ein Kraftfahrzeug sowie ein Verfahren bereitzustellen, durch welche(s) die Erkennbarkeit eines Hindernisses verbessert wird.

Diese Aufgabe wird gelöst durch eine Beleuchtungseinrichtung gemäß Patentanspruch 1, durch ein Fahrerassistenzsystem gemäß Patentanspruch 5, durch ein Kraftfahrzeug gemäß Patentanspruch 8 sowie durch ein Verfahren gemäß Patentanspruch 9. Vorteilhafte Weiterbildungen der vorliegenden Erfindung sind Gegenstand der abhängigen Ansprüche.

Die Erfindung geht aus von einer Beleuchtungseinrichtung für ein Kraftfahrzeug, welche dazu ausgelegt ist, in einer ersten Betriebsart ein erstes Lichtstrahlenbündel mit einer ersten Lichtverteilung zur Ausleuchtung einer Umgebung des Kraftfahrzeugs bereitzustellen, und in einer zweiten Betriebsart ein zweites Lichtstrahlenbündel mit einer zweiten Lichtverteilung zur Abbildung eines Messmusters auf die Umgebung bereitzustellen.

Erfindungsgemäß wird die Beleuchtungseinrichtung weitergebildet durch eine Steuervorrichtung, welche dazu ausgelegt ist, wechselweise die erste Betriebsart und die zweite Betriebsart in periodischer Folge zu aktivieren.

Der Erfindung liegt die Erkenntnis zugrunde, dass mittels einer Abbildung eines Messmusters auf die Umgebung durch eine in dem Kraftfahrzeug eingebaute Bilderfassungseinheit, insbesondere eine Kamera mit einem CCD-Sensor oder einem CMOS-Sensor, auf der Basis des durch eine zweidimensionale Bildaufnahme erfassten Messmusters ein räumliches Modell der Umgebung konstruiert werden kann. Das Messmuster wird somit in wiederkehrenden Intervallen auf die Fahrbahn projiziert. Um zu verhindern, dass das Messmuster störend von einem Fahrer des Kraftfahrzeugs wahrgenommen wird, wird die Frequenz der periodischen Folge zweckmäßigerweise so gewählt, dass dem Fahrer des Kraftfahrzeugs die Einblendung des Messmusters nicht auffällt. Überdies kann die zweite Betriebsart in einer Periode der Folge jeweils für eine wesentlich kürzere Zeitdauer aktiviert sein als die erste Betriebsart. Auf diese Weise kann ein störender Einfluss der Abbildung des Messmusters auf den Fahrer des Kraftfahrzeugs weitgehend reduziert werden und gleichzeitig zur Ausleuchtung der Umgebung die durch die Beleuchtungseinrichtung bereitstellbare Leistung größtenteils zur Verfügung gestellt werden, Bevorzugt kann vorgesehen sein, dass die zweite Betriebsart mit einem zeitlichen Anteil von maximal 10% aktiviert wird. Dies entspräche einer mittleren Lichtleistung von 90% bis <100%.

Gemäß einer vorteilhaften Weiterbildung umfasst die Beleuchtungseinrichtung eine gemeinsame Lichtquelle, welche dazu ausgelegt ist, in der ersten Betriebsart das erste Lichtstrahlenbündel und in der zweiten Betriebsart das zweite Lichtstrahlenbündel zu erzeugen. Hieraus ergibt sich der Vorteil, dass bestehende Bauteile des Fahrzeugs weiter verwendet werden können. Insbesondere kann auf zusätzliche Messstrahler, wie sie beispielsweise von der DE 10 2010 039 092 A1 und der EP 1 628 141 A1 offenbart werden, verzichtet werden. Durch die Nutzung bestehender Komponenten in dem Kraftfahrzeug wird somit in vorteilhafter Weise das gleiche Spektrum für das erste Lichtstrahlenbündel und das zweite Lichtstrahlenbündel verwendet. Das Spektrum liegt insbesondere im sichtbaren Bereich, wobei die spektrale Zusammensetzung bevorzugt weißes Licht ergibt. Insbesondere können das erste Lichtstrahlenbündel und das zweite Lichtstrahlenbündel über denselben optischen Pfad übertragen werden. Das heißt, das erste Lichtstrahlenbündel und das zweite Lichtstrahlenbündel weisen denselben Strahlengang auf. Somit kann beispielsweise eine Lichtaustrittsfläche der Beleuchtungseinrichtung, beispielsweise durch eine Projektionslinse, klein gehalten werden und somit ein kompakter Aufbau erzielt werden. Die Lichtquelle kann insbesondere durch eine Laserlichtquelle realisiert sein, insbesondere in Form einer oder mehrerer Laserdioden. Bevorzugt emittiert die Laserlichtquelle im blauen Spektralbereich, wobei unter Verwendung eines Konverterleuchtstoffs weißes Licht erzeugt wird. Selbstverständlich sind mit der Erfindung auch andere Arten von Lichtquellen nutzbar, beispielsweise Leuchtdioden (LED).

Gemäß einer vorteilhaften Ausgestaltung umfasst die Beleuchtungseinrichtung eine punktweise ansteuerbare Lichtmodulationseinheit zum Formen des ersten Lichtstrahlenbündels und/oder des zweiten Lichtstrahlenbündels aus einer Vielzahl von einzeln modulierbaren, mit einem jeweiligen Bildpunkt korrelierten Einzelstrahlen, wobei die Steuervorrichtung dazu ausgelegt ist, zur Aktivierung der ersten Betriebsart und/oder der zweiten Betriebsart ein Bildsignal, insbesondere ein Videosignal, an die Lichtmodulationseinheit bereitzustellen. Die Lichtmodulationseinheit kann beispielsweise durch ein Aktiv-Matrix-Display ausgebildet sein, wie es aus der Verwendung für Flüssigkristallbildschirme bzw. -projektoren (LCD, liquid crystal display) bekannt ist. Dabei wird eine LCD-Matrix in den Strahlengang gebracht, wobei der Transmissionsgrad jedes einzelnen Matrix-Bildpunkts (Pixel) über ein entsprechendes Steuersignal eingestellt werden kann. Auf diese Weise kann eine punktweise steuerbare Blende realisiert werden. Eine alternative Realisierung der Lichtmodulationseinheit kann durch eine Spiegelmatrix erfolgen. Dieses als Digital Micromirror Device (DMD) bekannte Bauteil ist beispielsweise zentraler Bestandteil von so genannten DLP-Projektoren (digital light processing). Es handelt sich hierbei um einen Flächenlichtmodulator, welcher aus matrixförmig angeordneten Mikrospiegelaktoren besteht, d.h. verkippbar spiegelnden Flächen, die unter dem Einfluss elektrostatischer Felder bewegt werden. Jeder Mikrospiegel lässt sich in seinem Winkel einzeln verstellen und besitzt in der Regel zwei stabile Endzustände. Die erste Lichtverteilung bzw. zweite Lichtverteilung des ersten bzw. zweiten Lichtstrahlenbündels, die auf die Umgebung geleitet werden, hängt in diesem Fall von der Anordnung der Mikrospiegel ab, die sich in der jeweiligen Kipplage befinden.

Besonders bevorzugt ist die Beleuchtungseinrichtung als hochauflösender Fahrzeugscheinwerfer mit einer Auflösung von mindestens 320 000 Bildpunkten, insbesondere mindestens 360 000 Bildpunkten, besonders bevorzugt mindestens 400 000 Bildpunkten, zur Erzeugung des ersten Lichtstrahlenbündels und/oder des zweiten Lichtstrahlenbündels ausgebildet. Die hochauflösenden Scheinwerfer zukünftiger Kraftfahrzeuge, die zur besseren Ausleuchtung der Straße und zur Interaktion mit anderen Verkehrsteilnehmern eingeführt werden, erhalten somit eine weitere, technisch unterstützende Funktion. Derartige hochauflösende Scheinwerfer können mit einem Bilddatenstrom (video stream) angesteuert werden. Somit ist die Einbettung einzelner Bilder (frames) mit Messmustern problemlos ohne zusätzlichen Aufwand möglich. Auch ein sich wiederholendes Invertieren definierter Bereiche ist mit derartigen Fahrzeugscheinwerfern ohne Einschränkungen möglich.

Ergänzend wird an dieser Stelle darauf hingewiesen, dass die erste Betriebsart und die zweite Betriebsart sich hinsichtlich ihres Funktiohszwecks auch überlappen können. So kann beispielsweise der ersten Lichtverteilung zur Ausleuchtung der Umgebung des Kraftfahrzeugs in der ersten Betriebsart ein Messmuster überlagert sein, welches invers zu dem Messmuster der zweiten Lichtverteilung ausgebildet ist. Bei vollständiger Anwendung dieses Prinzips könnten somit alternativ zur Einblendung des Messmusters mit einer definierten Frequenz auch Betriebsmodi eingesetzt werden, in denen die einzelnen Pixel der ersten Lichtverteilung und der zweiten Lichtverteilung zumindest teilweise jeweils invers zueinander geschaltet sind. In diesem Fall ist das Verhältnis der Dauer der ersten Betriebsart zu der Dauer der zweiten Betriebsart innerhalb einer Periode der Folge von untergeordneter Bedeutung. Das menschliche Auge mittelt auch in diesem Fall der Ansteuerung die Helligkeit. Eine Auflösung der unterschiedlichen Einzelbilder ist lediglich über eine Bilderfassungseinheit möglich. Wenn genügend Lichtleistung aus der Beleuchtungseinrichtung zur Verfügung steht, kann sogar bis 100% der Zeit das Messmuster erzeugt werden. Dazu kann beispielsweise ein aus Streifen gebildetes Messmuster in jedem zweiten Bild invertiert dargestellt werden. Im Auge eines Betrachters entsteht integriert eine homogene Lichtverteilung.

Bevorzugt kann ein Fahrerassistenzsystem für ein Kraftfahrzeug eine erfindungsgemäße Beleuchtungseinrichtung sowie eine Bilderfassungseinheit, welche dazu ausgelegt ist, Bilddaten in Abhängigkeit von der mit dem ersten Lichtstrahlenbündel und/oder mit dem zweiten Lichtstrahlenbündel beleuchteten Umgebung des Kraftfahrzeugs zu ermitteln, umfassen, wodurch sich ein erfindungsgemäßes Fahrerassistenzsystem ergibt. Die Bilderfassungseinheit kann bevorzugt mit der periodischen Folge der ersten Betriebsart und der zweiten Betriebsart synchronisiert sein.

Gemäß einer vorteilhaften Weiterbildung umfasst das Fahrerassistenzsystem eine Auswerteeinheit, welche dazu ausgelegt ist, aus den Bilddaten ein Vorhandensein eines Hindernisses in der Umgebung des Kraftfahrzeugs zu ermitteln. Das von der Beleuchtungseinrichtung in wiederkehrenden Intervallen auf die Fahrbahn projizierte Messmuster kann somit von der synchronisiert betriebenen Bilderfassungseinheit, beispielsweise einer in der Nähe des Innenspiegels des Kraftfahrzeugs angebrachten Kamera, in Form eines Bilds des ausgeleuchteten Fahrbereichs aufgenommen werden und an die Auswerteeinheit weitergegeben werden. Die Auswerteeinheit vergleicht das abgestrahlte Messmuster mit dem aufgenommenen Bild und berechnet anhand der Musterverformung und der erwarteten Werte für die Ausbreitung des Lichts, ob sich Hindernisse im Fahrbereich befinden und welche Form sowie welche Entfernung diese besitzen. Dabei kann neben der Verformung der Muster auch ihre Dicke einen Hinweis auf die Geometrie des beobachteten Objekts geben. Durch die Auswertung der Messmuster ist es somit möglich, ein dreidimensionales Bild der Umgebung zu erstellen. Die durch die Auswerteeinheit zusätzlich ermittelten Informationen können somit vorteilhaft zur Erhöhung der Genauigkeit von Messungen anderer, in dem Kraftfahrzeug angeordneter Sensoren dienen.

Gemäß einer vorteilhaften Weiterbildung des Fahrerassistenzsystems ist die Auswerteeinheit dazu ausgelegt, in Abhängigkeit von einer Position eines ermittelten Hindernisses innerhalb der Umgebung des Kraftfahrzeugs ein Korrektursignal zur Ansteuerung einer Lenkvorrichtung und/oder einer Bremsvorrichtung des Kraftfahrzeugs bereitzustellen. Somit können die von der Auswerteeinheit ermittelten Hindernisse direkt von dem Fahrerassistenzsystem zur Korrektur des Fahrwegs und/oder der Geschwindigkeit des Kräftfahrzeugs herangezogen und damit ein zusätzlicher Sicherheitsgewinn erzielt werden.

Bevorzugt kann ein Kraftfahrzeug ein erfindungsgemäßes Fahrerassistenzsystem umfassen, wodurch sich ein erfindungsgemäßes Kraftfahrzeug ergibt. Das Kraftfahrzeug kann einen Verbrennungsmotor und/oder einen Elektromotor als Antriebsmaschine aufweisen. Insbesondere kann das Kraftfahrzeug dazu ausgelegt sein, eine selbsttätige Geschwindigkeitsregelung und/oder eine Spurführungsregelung bereitzustellen. Die Erfindung kann vorteilhaft in einem halbautomatischen und/oder in einem vollautomatischen Fahrbetrieb des Kraftfahrzeugs eingesetzt werden.

Die Erfindung geht weiterhin aus von einem Verfahren zum Betreiben einer Beleuchtungseinrichtung eines Kraftfahrzeugs durch in einer ersten Betriebsart Bereitstellen eines ersten Lichtstrahlenbündels mit einer ersten Lichtverteilung zur Ausleuchtung einer Umgebung des Kraftfahrzeugs, und in einer zweiten Betriebsart Bereitstellen eines zweiten Lichtstrahlenbündels mit einer zweiten Lichtverteilung zur Abbildung eines Messmusters auf die Umgebung. Erfindungsgemäß wird das Verfahren weitergebildet durch wechselweise Aktivieren der ersten Betriebsart und der zweiten Betriebsart in periodischer Folge.

Gemäß einer vorteilhaften Weiterbildung umfasst das Verfahren Ermitteln von Bilddaten in Abhängigkeit von der mit dem ersten Lichtstrahlenbündel und/oder mit dem zweiten Lichtstrahlenbündel beleuchteten Umgebung des Kraftfahrzeugs, insbesondere als jeweils mit der ersten Betriebsart und/oder mit der zweiten Betriebsart synchronisierte Bilderfolge. Somit können in Abhängigkeit von dem Verwendungszweck unterschiedliche Bilddaten bereitgestellt werden, beispielsweise für die Auswerteeinheit zur Hinderniserkennung Bilddaten in Abhängigkeit von der mit dem zweiten Lichtstrahlenbündel beleuchteten Umgebung des Kraftfahrzeugs oder beispielsweise für die Bereitstellung an eine Anzeigeeinheit, beispielsweise einen Bildschirm im Innenraum des Kraftfahrzeugs, auf der Basis von Bilddaten, die in Abhängigkeit von der mit dem ersten Lichtstrahlenbündel beleuchteten Umgebung ermittelt wurden.

Gemäß einer bevorzugten Ausgestaltung des Verfahrens ist das Messmuster als Streifenmuster oder als Gittermuster ausgebildet. Die Streifenlichtprojektion findet Anwendung in der Vermessung von Objekten und Oberflächen, deren Daten in CAD-Modelle umgewandelt werden. Hierbei wird mittels Lichtquelle ein Streifenmuster auf das zu untersuchende Objekt aufgebracht und dieses simultan mit einer Kamera aufgenommen. Anhand der Verformung der vormals fest definierten Licht-Schatten-Muster auf dem Objekt wird mittels eines Rechenprogramms seine Geometrie berechnet. Ein Streifenmuster oder Gittermuster bietet somit eine geeignete Grundlage, um eine 3D-Kontur eines Objekts oder einer Oberfläche zu analysieren. Bevorzugt kann vorgesehen sein, dass in der zweiten Betriebsart nicht ein einziges Messmuster, sondern mehrere Messmuster in iterativer Folge bei jedem Aktivieren der zweiten Betriebsart aufgerufen werden. Besonders bevorzugt können zwei Streifenmuster jeweils im Wechsel aktiviert werden, deren Streifenausrichtungen orthogonal zueinander sind. Unabhängig davon kann periodisch der Abstand der beleuchteten Streifen und/oder die Breite der beleuchteten Streifen periodisch variiert werden. Überdies kann vorgesehen sein, dass zumindest einer der nachfolgenden Parameter des Streifenmusters zeit- bzw. index-abhängig (Nummerierung der aktuellen Periode der Folge) ist: Ausrichtung des Streifenmusters; Abstand des Streifenmusters; Breite des Streifenmusters. Durch Variation eines oder mehrerer der genannten Parameter kann eine maximal mögliche Detailtiefe erreicht werden.

Die für die erfindungsgemäße Beleuchtungseinrichtung beschriebenen Vorteile und bevorzugten Ausführungsformen gelten auch für das erfindungsgemäße Fahrerassistenzsystem und das erfindungsgemäße Kraftfahrzeug. Ebenso gelten die für die erfindungsgemäßen Vorrichtungen beschriebenen Vorteile und Merkmale sowie Ausführungsformen gleichermaßen für entsprechende Verfahren und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung offenbart anzusehen, die in den Figuren nicht explizit gezeigt oder erläutert sind, jedoch durch separierte Merkmalskombination aus den erläuterten Ausführungen hervorgehen und erzeugbar sind.

Weitere Vorteile und Merkmale ergeben sich anhand der folgenden Beschreibung von Ausführungsbeispielen unter Berücksichtigung der beigefügten Figuren. In den Figuren bezeichnen gleiche Bezugszeichen gleiche Merkmale und Funktionen.

Es zeigen:
- Fig. 1: in vereinfachter schematischer Darstellung ein bevorzugtes erstes Ausführungsbeispiel einer erfindungsgemäßen Beleuchtungseinrichtung;
- Fig. 2: in vereinfachter schematischer Darstellung ein bevorzugtes zweites Ausführungsbeispiel einer erfindungsgemäßen Beleuchtungseinrichtung;
- Fig. 3: in vereinfachter schematischer Darstellung eine gemäß der Erfindung beleuchtete, hindernisfreie Umgebung eines Kraftfahrzeugs;
- Fig. 4: in vereinfachter schematischer Darstellung eine gemäß der Erfindung beleuchtete Umgebung mit einem quaderförmigen Hindernis; und
- Fig. 5: in vereinfachter schematischer Darstellung eine gemäß der Erfindung beleuchtete Umgebung mit einem kugelförmigen Hindernis.

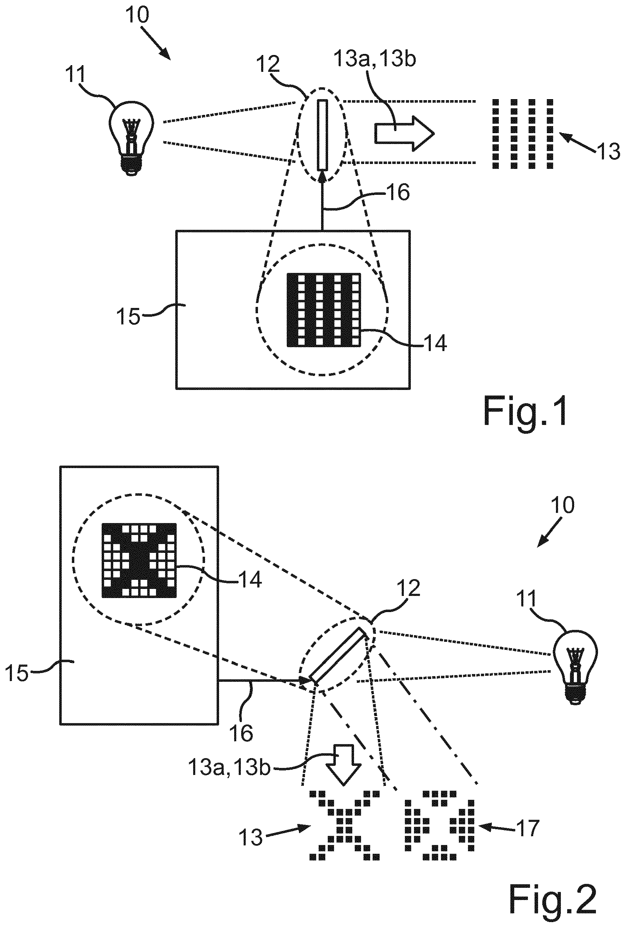

Eine erfindungsgemäße Beleuchtungseinrichtung 10 umfasst gemäß einer bevorzugten ersten Ausführungsform, wie in der Fig. 1 dargestellt, eine Lichtquelle 11, welche Licht auf eine Lichtmodulationseinheit 12 strahlt. Die Lichtmodulationseinheit 12 ist als Flüssigkristallanzeige (liquid crystal display, LCD) ausgebildet. Die Lichtmodulationseinheit 12 weist eine Vielzahl von matrixförmig angeordneten Einzelelementen auf, die jeweils einem einzelnen Bildpunkt zugeordnet sind. In Abhängigkeit von einem Bildsignal 16, welches von einer Steuervorrichtung 15 bereitgestellt wird, können die einzelnen Bildpunkte (Pixel) in einen durchlässigen (transmissiven) Zustand oder in einen undurchlässigen, insbesondere absorbierenden Zustand geschaltet werden. Somit erzeugt die Beleuchtungseinrichtung 10 ein resultierendes Lichtmuster 13, welches mit einem von der Steuervorrichtung 15 erzeugten Ansteuerungsmuster 14 korreliert ist, das über das Bildsignal 16 an die Lichtmodulationseinheit 12 bereitgestellt wird.

In periodischer Folge wird durch die Steuervorrichtung 15 eine erste Betriebsart und eine zweite Betriebsart wechselweise aktiviert, wobei in der ersten Betriebsart ein erstes Lichtstrahlenbündel 13a mit einer ersten Lichtverteilung zur Ausleuchtung einer Umgebung des Kraftfahrzeugs und in einer zweiten Betriebsart ein zweites Lichtstrahlenbündel 13b mit einer zweiten Lichtverteilung zur Abbildung eines Messmusters auf die Umgebung bereitgestellt wird. Das für die Darstellung der Fig. 1 beispielhaft gewählte Ansteuerungsmuster 14 entspricht hierbei der zweiten Lichtverteilung des zweiten Lichtstrahlenbündels mit einem streifenförmigen Messmuster.

Gemäß einer bevorzugten zweiten Ausführungsform entsprechend der Darstellung in der Fig. 2 ist die Lichtmodulationseinheit 12 durch ein Mikrospiegelarray ausgebildet. Die Lichtquelle 11, sowie die Steuervorrichtung 15, welche das Bildsignal 16 an die Lichtmodulationseinheit 12 bereitstellt, entsprechen dem Aufbau des ersten Ausführungsbeispiels. Zur besseren Veranschaulichung der Funktionsweise eines Mikrospiegelarrays ist das Ansteuerungsmuster 14 ohne beschränkende Wirkung für die Erfindung beispielhaft als Kreuz dargestellt. Im Übrigen lässt sich ein Kreuz als primitivste Form eines aus zwei einzelnen Streifen gebildeten Gitters betrachten.

Die Stellung der einzelnen Mikrospiegel, welche matrixförmig auf der Lichtmodulationseinheit 12 angeordnet sind, korreliert mit dem Ansteuerungsmuster 14. Somit wird das erste Lichtstrahlenbündel 13a bzw. das zweite Lichtstrahlenbündel 13b in die Richtung auf das resultierende Lichtmuster 13 gelenkt. Wie bereits in der vorhergehenden Darstellung repräsentiert das resultierende Lichtmuster 13 bzw. das Ansteuerungsmuster 14 ein für die zweite Betriebsart verwendetes Messmuster. Ein ausgeblendetes Lichtmuster 17 bildet die komplementäre Darstellung zu dem Ansteuerungsmuster 14 und somit auch zu dem resultierenden Lichtmuster 13. Das ausgeblendete Lichtmuster 17 ist somit das Negativ des resultierenden Lichtmusters 13. Die in Richtung auf das ausgeblendete Lichtmuster 17 gelenkten Lichtstrahlen werden in vorteilhafter Weise in eine sogenannte Lichtfalle umgeleitet, in der das Licht absorbiert wird und unerwünschte Reflexionen unterdrückt werden. Mit einem solchen Digital Micromirror Device (DMD), welches eine Matrix von Hunderttausenden von Mikrospiegeln umfasst, wobei jeder einzelne Mikrospiegel mithilfe elektrostatischer Felder pro Sekunde bis zu 5000 mal gekippt werden kann. Das Mikrospiegelarray ist damit nicht nur ein hervorragend geeignetes Mittel zur Implementierung der Erfindung, sondern ermöglicht darüber hinaus auch noch über eine entsprechende zeitliche Modulation, beispielsweise über eine Pulsweitensteuerung in jeder der beiden Betriebsarten die Einstellung von effektiven Zwischenwerten zwischen einem vollständig in Richtung des resultierenden Lichtmusters 13 gelenkten Lichtstrahl und einem vollständig in Richtung des ausgeblendeten Lichtmusters 17 gelenkten Lichtstrahl zur Realisierung eines beliebigen Helligkeitswerts, d.h. eines Grauwerts, anstelle eines reinen Schwarz-Weiß-Werts.

Die schwarzen Vierecke des Lichtmusters 13 stellen sowohl in der Fig. 1 als auch in der Fig. 2 die unbeleuchteten/dunklen Bereiche dar.

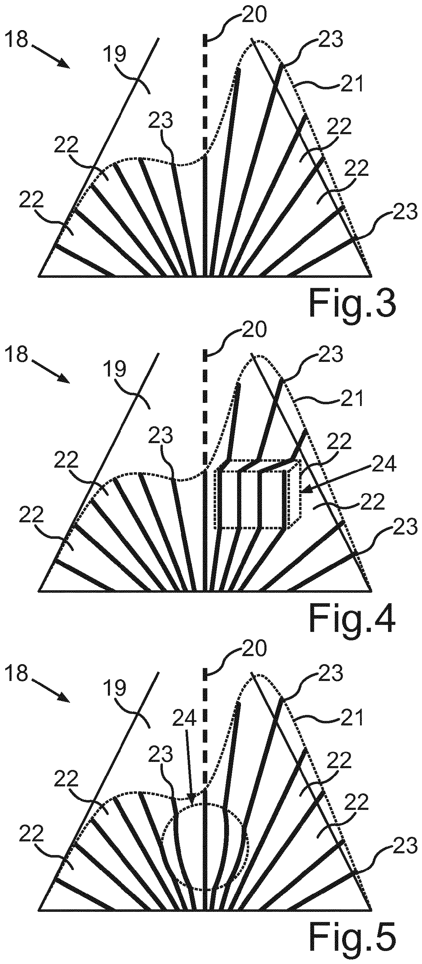

Fig. 3 zeigt eine Umgebung 18 eines Kraftfahrzeugs mit einer Fahrbahn 19, auf der mittig ein Mittelstreifen 20 aufgebracht ist. Das aus den Fig. 1 und 2 bekannte erste Lichtstrahlenbündel 13a weist eine erste Lichtverteilung 21 auf, welche den bei einem Kraftfahrzeug typischen keulenförmigen Verlauf zeigt. Die Doppelkeule ergibt sich hierbei aus der Überlagerung zweier einzelner Scheinwerfer. Zweckmäßigerweise werden beide Einzelscheinwerfer so aufeinander angepasst, dass sich im Überlagerungsbereich eine nahezu versatzfreie Überdeckung einer zweiten Lichtverteilung 22 mit dunklen Streifen 23 ergibt. Zur übersichtlicheren Darstellung ist das Bezugszeichen für die erste Lichtverteilung 21 an der Begrenzungslinie des beleuchteten Bereichs dargestellt. Die erste Lichtverteilung innerhalb dieser Begrenzungslinie wird als homogen betrachtet, abgesehen von einer durch die jeweilige Optik (Projektionslinse) des jeweiligen Fahrzeugscheinwerfers verursachte Änderung, welche das erste Lichtstrahlenbündel 13a mit der ersten Lichtverteilung 21 in gleicher Weise betrifft wie das zweite Lichtstrahlenbündel 13b mit der zweiten Lichtverteilung 22. Die zweite Lichtverteilung 22 umfasst den gesamten Bereich innerhalb der die erste Lichtverteilung 21 kennzeichnenden Begrenzungslinie abzüglich der dunklen Streifen 23, welche in gleicher Weise wie die zweite Lichtverteilung 22 nur exemplarisch mit Bezugszeichen versehen sind. Die Beleuchtungseinrichtung 10 erzeugt somit ein Muster, welches auf die Fahrbahn 19 auftrifft. Die dunklen Streifen 23 stellen hierbei Bereiche ohne Scheinwerferbeleuchtung dar. Ohne Hindernisse ergibt sich die vereinfachte und beispielhafte Lichtverteilung wie in der Fig. 3 dargestellt. Ausgehend von der unteren waagerechten Linie, die den Blickpunkt des Kraftfahrzeugs darstellt, wird der Lichtkegel, der die dunkle Straße ausleuchtet, von dunklen Linien unterbrochen, das heißt Bereichen, in denen das Licht gerade ausgeschaltet ist. Im Hintergrund dargestellt ist die unbeleuchtete Fahrbahn 19 inklusive Mittelstreifen 20. Die dunklen Muster des Scheinwerfers erstrecken sich hierbei linear in Richtung des Horizonts bis zu der die erste Lichtverteilung 21 kennzeichnenden Begrenzungslinie. Jenseits dieser Begrenzungslinie ist die Fahrbahn 19 unbeleuchtet, abgesehen von möglicherweise auftretendem Streulicht, welches keine beleuchtende Funktionalität besitzt.

In der Darstellung der Fig. 4 ist die Anordnung aus der Fig. 3 mit einem Hindernis 24 in Form eines Quaders ergänzt. Die Form der zweiten Lichtverteilung 22 und der dunklen Streifen 23, die im Bereich des Hindernisses 24 gegenüber ihrem linearen Verlauf, wie aus der Fig. 3 ersichtlich, gestört sind, können mithilfe einer Bilderfassungseinheit, welche an oder in dem Kraftfahrzeug angebracht ist, erfasst werden. Durch die Verformung der dunklen Streifen 23, welche die Lücken in der zweiten Lichtverteilung 22 kennzeichnen, kann eine Auswerteeinheit des Kraftfahrzeugs die Dimensionen und den Abstand des Hindernisses 24 berechnen.

In entsprechender Welse zeigt Fig. 5 die Umgebung 18 eines Kraftfahrzeugs, welche mit einer erfindungsgemäßen Beleuchtungseinrichtung 10 beleuchtet wird, wobei in diesem Fall das Hindernis 24 durch ein kugelförmiges Objekt gegeben ist. Die entsprechende beispielhafte Verformung des Hell-Dunkel-Musters, gegeben durch die zweite Lichtverteilung 22, die durch die dunklen Streifen 23 unterbrochen ist, kann in entsprechender Weise durch eine fahrzeugeigene Bilderfassungseinheit (Kamera) erfasst werden.

Die auf diese Weise von der Kamera bzw. der Auswertevorrichtung ermittelten Daten bezüglich einer Dimension und/oder eines Abstands eines Hindernisses 24 können mit Daten anderer Sensoren in dem Kraftfahrzeug fusioniert werden, um damit höhere Genauigkeiten in der Erfassung von Hindernissen 24 zu erzielen. Überdies können die Daten mit anderen Verkehrsteilnehmern geteilt werden, beispielsweise mittels einer sogenannten Car2Car-Kommunikation oder Car2X-Kommunikation.

Die Ausführungsbeispiele dienen lediglich der Erläuterung der Erfindung und sind für diese nicht beschränkend. So können insbesondere die Art und die Anzahl der Messmuster beliebig gestaltet sein, ohne den Gedanken der Erfindung zu verlassen.

Somit wurde voranstehend gezeigt, wie eine Streifenlichttopologie mittels hochauflösender Scheinwerfer zur Hinderniserkennung eingesetzt werden kann.

## Patentansprüche

1. Beleuchtungseinrichtung (10) für ein Kraftfahrzeug, welche dazu ausgelegt ist,
- in einer ersten Betriebsart ein erstes Lichtstrahlenbündel (13a) mit einer ersten Lichtverteilung (21) zur Ausleuchtung einer Umgebung (18) des Kraftfahrzeugs und zur Abbildung eines ersten Messmusters auf die Umgebung (18) bereitzustellen, und
- in einer zweiten Betriebsart ein zweites Lichtstrahlenbündel (13b) mit einer zweiten Lichtverteilung (22) zur Abbildung eines zweiten Messmusters auf die Umgebung (18) bereitzustellen,
- eine Steuervorrichtung (15), welche dazu ausgelegt ist, wechselweise die erste Betriebsart und die zweite Betriebsart in periodischer Folge zu aktivieren, wobei
- das erste Messmuster zu dem zweiten Messmuster invers ausgebildet ist.

2. Beleuchtungseinrichtung (10) nach Anspruch 1,
**gekennzeichnet durch**:
- eine gemeinsame Lichtquelle (11), welche dazu ausgelegt ist, in der ersten Betriebsart das erste Lichtstrahlenbündel (13a) und in der zweiten Betriebsart das zweite Lichtstrahlenbündel (13b) zu erzeugen.

3. Beleuchtungseinrichtung (10) nach einem der vorhergehenden Ansprüche,
**gekennzeichnet durch**:
- eine punktweise ansteuerbare Lichtmodulationseinheit (12) zum Formen des ersten Lichtstrahlenbündels (13a) und/oder der zweiten Lichtstrahlenbündels (13b) aus einer Vielzahl von einzeln modulierbaren mit einem jeweiligen Bildpunkt korrelierten Einzelstrahlen, wobei die Steuervorrichtung (15) dazu ausgelegt ist, zur Aktivierung der ersten Betriebsart und/oder der zweiten Betriebsart ein Bildsignal (16), insbesondere ein Videosignal, an die Lichtmodulationseinheit (12) bereitzustellen.

4. Beleuchtungseinrichtung (10) nach einem der vorhergehenden Ansprüche,
**dadurch gekennzeichnet,**
**dass** die Beleuchtungseinrichtung (10) als hochauflösender Fahrzeugscheinwerfer mit einer Auflösung von mindestens 320 000 Bildpunkten, insbesondere mindestens 360 000 Bildpunkten, besonders bevorzugt mindestens 400 000 Bildpunkten, zur Erzeugung des ersten Lichtstrahlenbündels (13a) und/oder des zweiten Lichtstrahlenbündels (13b) ausgebildet ist.

5. Fahrerassistenzsystem für ein Kraftfahrzeug mit einer Beleuchtungseinrichtung (10) nach einem der vorhergehenden Ansprüche,
**gekennzeichnet durch**:
- eine Bilderfassungseinheit, welche dazu ausgelegt ist, Bilddaten in Abhängigkeit von der mit dem ersten Lichtstrahlenbündel (13a) und/oder mit dem zweiten Lichtstrahlenbündel (13b) beleuchtete Umgebung (18) des Kraftfahrzeugs zu ermitteln.

6. Fahrerassistenzsystem nach Anspruch 5,
**gekennzeichnet durch**:
- eine Auswerteeinheit, welche dazu ausgelegt ist, aus den Bilddaten ein Vorhandensein eines Hindernisses (24) in der Umgebung (18) des Kraftfahrzeugs zu ermitteln.

7. Fahrerassistenzsystem nach Anspruch 6,
**dadurch gekennzeichnet,**
**dass** die Auswerteeinheit dazu ausgelegt ist, in Abhängigkeit von einer Position eines ermittelten Hindernisses (24) innerhalb der Umgebung (18) des Kraftfahrzeugs ein Korrektursignal zur Ansteuerung einer Lenkvorrichtung und/oder einer Bremsvorrichtung des Kraftfahrzeugs bereitzustellen.

8. Kraftfahrzeug mit einem Fahrerassistenzsystem nach einem der Ansprüche 5 bis 7.

9. Verfahren zum Betreiben einer Beleuchtungseinrichtung (10) eines Kraftfahrzeugs durch:
- in einer ersten Betriebsart Bereitstellen eines ersten Lichtstrahlenbündels (13a) mit einer ersten Lichtverteilung (21) zur Ausleuchtung einer Umgebung (18) des Kraftfahrzeugs und zur Abbildung eines ersten Messmusters auf die Umgebung (18), und
- in einer zweiten Betriebsart Bereitstellen eines zweiten Lichtstrahlenbündels (13b) mit einer zweiten Lichtverteilung (22) zur Abbildung eines zweiten Messmusters auf die Umgebung (18),
- wechselweise Aktivieren der ersten Betriebsart und der zweiten Betriebsart in periodischer Folge, wobei
- das erste Messmuster zu dem zweiten Messmuster invers ausgebildet ist.

10. Verfahren nach Anspruch 9,
**gekennzeichnet durch**:
- Ermitteln von Bilddaten in Abhängigkeit von der mit dem ersten Lichtstrahlenbündel (13a) und/oder mit dem zweiten Lichtstrahlenbündel (13b) beleuchtete Umgebung (18) des Kraftfahrzeugs, insbesondere als jeweils mit der ersten Betriebsart und/oder mit der zweiten Betriebsart synchronisierte Bilderfolge.

11. Verfahren nach einem der Ansprüche 9 bis 10,
**dadurch gekennzeichnet,**
**dass** das Messmuster als Streifenmuster oder als Gittermuster ausgebildet ist.

## Claims

1. Lighting device (10) for a motor vehicle, which is configured,
- in a first operating mode, to provide a first light beam (13a) with a first light distribution (21) for illuminating an environment (18) of the motor vehicle and for mapping a first measurement pattern onto the environment (18), and
- in a second operating mode, to provide a second light beam (13b) with a second light distribution (22) for mapping a second measurement pattern onto the surroundings (18),
- a control device (15) adapted to alternately activate the first operating mode and the second operating mode in periodic sequence, wherein
- the first measurement pattern is inverse to the second measurement pattern.

2. Lighting device (10) according to claim 1,
**characterised by**:
- a common light source (11) adapted to generate the first light beam (13a) in the first operating mode and the second light beam (13b) in the second operating mode.

3. Lighting device (10) according to any one of the preceding claims,
**characterised by**:
- a light modulation unit (12) that can be controlled point-by-point for shaping the first light beam (13a) and/or the second light beam (13b) from a plurality of individually modulatable individual beams correlated with a respective pixel, wherein the control device (15) is configured to provide an image signal (16), in particular a video signal, to the light modulation unit (12) for activating the first operating mode and/or the second operating mode.

4. Lighting device (10) according to any one of the preceding claims,
**characterised in that**,
the lighting device (10) is formed as a high-resolution motor vehicle headlamp with a resolution of at least 320,000 pixels, in particular at least 360,000 pixels, particularly preferably at least 400,000 pixels, for generating the first light beam (13a) and/or the second light beam (13b).

5. Driver assistance system for a motor vehicle with a lighting device (10) according to any one of the preceding claims,
**characterised by**:
- an image acquisition unit configured to acquire image data as a function of the environment (18) of the motor vehicle illuminated by the first light beam (13a) and/or by the second light beam (13b).

6. Driver assistance system according to claim 5,
**characterised by**:
- an evaluation unit which is configured to determine from the image data the presence of an obstacle (24) in the environment (18) of the motor vehicle.

7. Driver assistance system according to claim 6,
**characterised in that**
the evaluation unit is configured to provide a correction signal for actuating a steering device and/or a braking device of the motor vehicle as a function of a position of a detected obstacle (24) within the environment (18) of the motor vehicle.

8. Motor vehicle with a driver assistance system according to any one of claims 5 to 7.

9. Method for operating a lighting device (10) of a motor vehicle by:
- in a first operating mode, providing a first light beam (13a) with a first light distribution (21) for illuminating an environment (18) of the motor vehicle and for mapping a first measurement pattern onto the environment (18), and
- in a second operating mode, providing a second light beam (13b) with a second light distribution (22) for mapping a measurement pattern onto the environment (18),
- alternately activating the first operating mode and the second operating mode in periodic sequence, wherein
- the first measurement pattern is inverse to the second measurement pattern.

10. Method according to claim 9,
**characterised by**:
- determining image data as a function of the environment (18) of the motor vehicle illuminated by the first light beam (13a) and/or by the second light beam (13b), in particular as an image sequence synchronised in each case with the first operating mode and/or with the second operating mode.

11. Method according to any one of claims 9 to 10,
**characterised in that**
the measurement pattern is formed as a stripe pattern or a grid pattern.

## Revendications

1. Dispositif d'éclairage (10) pour un véhicule à moteur, qui est conçu,
- dans un premier mode de fonctionnement, pour fournir un premier faisceau lumineux (13a) à une première distribution lumineuse (21) pour éclairer un environnement (18) du véhicule à moteur et pour visualiser un premier modèle de mesure sur l'environnement (18), et
- dans un deuxième mode de fonctionnement, pour fournir un deuxième faisceau lumineux (13b) à une deuxième distribution lumineuse (22) pour visualiser un deuxième modèle de mesure de sur l'environnement (18).
- un dispositif de commande (15) qui est conçu pour activer de manière alternative le premier mode de fonctionnement et le deuxième mode de fonctionnement en succession périodique, dans lequel
- le premier modèle de mesure est inverse du deuxième modèle de mesure.

2. Dispositif d'éclairage (10) selon la revendication 1,
**caractérisé par** :
- une source de lumière commune (11) qui est conçue pour générer le premier faisceau lumineux (13a) dans le premier mode de fonctionnement et le deuxième faisceau lumineux (13b) dans le deuxième mode de fonctionnement,

3. Dispositif d'éclairage (10) selon l'une quelconque des revendications précédentes,
**caractérisé par** :
- une unité de modulation de lumière à commande ponctuelle (12) pour former le premier faisceau lumineux (13a) et/ou le deuxième faisceau lumineux (13b) à partir d'une pluralité de faisceaux individuels modulables individuellement corrélés avec un pixel respectif, le dispositif de commande (15) étant conçu, pour l'activation du premier mode de fonctionnement et/ou du deuxième mode de fonctionnement, pour fournir un signal d'image (16), en particulier un signal vidéo, à l'unité de modulation de lumière (12).

4. Dispositif d'éclairage (10) selon l'une quelconque des revendications précédentes,
**caractérisé en ce que**
le dispositif d'éclairage (10) est conçu comme un phare de véhicule à haute résolution avec une résolution d'au moins 320000 pixels, en particulier d'au moins 360 000 pixels, le plus préférentiellement d'au moins 400 000 pixels, pour générer le premier faisceau lumineux (13a) et/ou le deuxième faisceau lumineux (13b).

5. Système d'assistance au conducteur pour un véhicule à moteur avec un dispositif d'éclairage (10) selon l'une quelconque des revendications précédentes, **caractérisé par** :
- une unité d'acquisition d'image, qui est conçue pour déterminer des données d'image en fonction de l'environnement (18) éclairé du véhicule à moteur par le premier faisceau lumineux (13a) et/ou par le deuxième faisceau lumineux (13b).

6. Système d'assistance au conducteur selon la revendication 5,
**caractérisé par** :
- une unité d'évaluation, qui est conçue pour déterminer la présence d'un obstacle (24) dans l'environnement (18) du véhicule à moteur à partir des données d'image.

7. Système d'assistance au conducteur selon la revendication 6,
**caractérisé en ce que**
l'unité d'évaluation est conçue pour fournir un signal de correction pour commander un dispositif de direction et/ou un dispositif de freinage du véhicule à moteur en fonction de la position d'un obstacle (24) déterminé dans l'environnement (18) du véhicule à moteur.

8. Véhicule à moteur avec un système d'assistance au conducteur selon l'une quelconque des revendications 5 à 7.

9. Procédé de fonctionnement d'un dispositif d'éclairage (10) d'un véhicule à moteur consistant à :
- dans un premier mode de fonctionnement, fournir un premier faisceau lumineux (13a) à une première distribution lumineuse (21) pour éclairer un environnement (18) du véhicule à moteur et pour visualiser un premier modèle de mesure sur l'environnement (18), et
- dans un deuxième mode de fonctionnement, fournir un deuxième faisceau lumineux (13b) à une deuxième distribution lumineuse (22) pour visualiser un deuxième modèle de mesure de sur l'environnement (18).
- activer de manière alternative le premier mode de fonctionnement et le deuxième mode de fonctionnement en succession périodique, dans lequel
- le premier modèle de mesure est inverse du deuxième modèle de mesure.

10. Procédé selon la revendication 9,
consistant à :
- déterminer des données d'image en fonction de l'environnement (18) du véhicule à moteur éclairé par le premier faisceau lumineux (13a) et/ou par le deuxième faisceau lumineux (13b), en particulier comme une séquence d'images synchronisée avec le premier mode de fonctionnement et/ou avec le deuxième mode de fonctionnement.

11. Procédé selon l'une quelconque des revendications 9 à 10,
**caractérisé en ce que**
le modèle de mesure est conçu comme un motif de bande ou comme un motif de grille.
